# EUROPÄISCHE PATENTSCHRIFT

(11) **EP 2 123 528 B1**
(45) Veröffentlichungstag und Bekanntmachung des Hinweises auf die Patenterteilung: **10.04.2019**
(21) Anmeldenummer: 09002318.5
(22) Anmeldetag: 19.02.2009
(51) Int. Cl.: B60T 7/20, B60T 8/17, B60T 13/26, B60T 13/68

(54) **Fahrzeugkombination mit einer Streckbremsvorrichtung**
Vehicle combination with an anti jack-knife trailer brake device
Combinaison de véhicule dotée d'un dispositif de frein de maintien en ligne

(30) Priorität: 21.05.2008 DE 102008024630
(43) Veröffentlichungstag der Anmeldung: 25.11.2009
(73) Patentinhaber: WABCO GmbH, 30453 Hannover (DE)
(72) Erfinder: Eckert, Horst, 31547 Rehburg-Loccum (DE); Gaulke, Arnd, 30974 Wennigsen (DE)

(56) Entgegenhaltungen:
- EP-A1- 1 359 076
- WO-A1-2008/044980
- DE-A1- 3 502 049
- US-A- 4 768 840

## Beschreibung

Die Erfindung betrifft eine Fahrzeugkombination mit einem Zugfahrzeug, mindestens einem Anhänger und einer Streckbremsvorrichtung, umfassend ein manuell betätigbares Bedienelement, eine elektronische Steuereinheit und eine im Anhänger angeordnete steuerbare Anhängerbremse, wobei Bedienelement und Anhängerbremse mit der Steuereinheit verbunden sind, und die Steuereinheit derart eingerichtet ist, dass diese einen Bremssteuerwert bildet, der von einem durch das Bedienelement vorgebbaren Anforderungssteuerwert abhängig ist, und in Abhängigkeit dieses Bremssteuerwertes die Steuereinheit, die mindestens eine Anhängerbremse steuert.

Eine derartige Streckbremsvorrichtung ermöglicht es, manuell die Bremsung eines Anhängers zu beeinflussen, unabhängig von der Betätigung einer Betriebsbremse, die sowohl die Bremsung von Zugfahrzeug und Anhänger beeinflusst.

Eine derartige Fahrzeugkombination offenbart die Druckschrift WO 03/029061 A1. Die in dieser Druckschrift offenbarte Streckbremsvorrichtung umfasst zusätzlich Mittel zum Messen der Temperatur der mindestens einen Anhängerbremse. Zu dem ist die Steuereinheit derart eingerichtet, dass diese einen Bremssteuerwert bildet, der von der gemessenen Temperatur der Anhängerbremse und von dem durch das Bedienelement vorgebbaren Anforderungssteuerwert abhängig ist. Dies ermöglicht es, eine Überhitzung der Anhängerbremse durch die Betätigung der Streckbremsvorrichtung zu vermeiden, da der Bremssteuerwert nicht allein aus dem Anforderungssteuerwert, sondern auch aus der Temperatur der Anhängerbremse gebildet wird. Ein zu hoher Anforderungssteuerwert kann auf diese Weise temperaturabhängig reduziert werden.

Die EP 1 359 076 A1 betrifft ein Verfahren zur Zuspannenergieregelung bei elektronisch geregelten Bremssystemen von Fahrzeugkombinationen aus wenigstens einem Zug-und Anhängerfahrzeug und eine Anordnung zur Durchführung des Verfahrens. In einer der Zentralsteuereinheiten werden die ermittelten Temperaturen der Radbremsen der Räder der Teilfahrzeuge (Anhängerfahrzeug) fahrzeugweise miteinander und mit einem vorbestimmten Temperaturgrenzwert verglichen.

Die US 4 768 840 A bezieht sich auf Steuerungen für Bremssysteme für Fahrzeugsysteme, die in Abhängigkeit von der Höhe der Fahrerbremsanforderungen die Bremskraft zwischen den individuell steuerbaren Fahrzeugbremsen, um ein ausgewogenes Bremsen (balanced braking), ein proportionales Bremsen (proportional braking) oder einen Kompromiß zwischen diesen zu erreichen.

Die WO 2008/044980 A1 betrifft ein Verfahren zur Messung des Bremsfaktors (Bf) in einem Bremssystem. Der gemessene Bremsfaktor ist für die Steuerung der Bremskraft auf jeder Achse des Fahrzeugs erforderlich.

DE 35 02 049 A1 betrifft eine Bremsdrucksteuereinrichtung für ein Kraftfahrzeug und/oder wenigstens einen Anhänger. Die genannte Bremsdrucksteuereinrichtung umfasst eine Steuerelektronik, die zur Ansteuerung der Druckregelventile in Abhängigkeit von einem Temperatur-Parameter dient.

Aufgabe vorliegender Erfindung ist es, eine Fahrzeugkombination mit einem Zugfahrzeug, einem Anhänger und einer Streckbremsvorrichtung zu schaffen, die die Bestimmung des Bremssteuerwertes in Abhängigkeit des Anforderungssteuerwertes durch die Steuereinheit weiter verbessert. Eine weitere Aufgabe der Erfindung ist es, ein Verfahren zur Steuerung einer Streckbremsvorrichtung einer Fahrzeugkombination mit einem Zugfahrzeug, einem Anhänger und einer Streckbremsvorrichtung zu schaffen.

Diese Aufgaben werden durch eine Fahrzeugkombination und ein Verfahren zur Steuerung einer Streckbremsvorrichtung nach den unabhängigen Ansprüchen gelöst.

Vorteilhafte Weiterbildungen sind Gegenstände der abhängigen Ansprüche.

Erfindungsgemäß umfasst die Streckbremsvorrichtung der Fahrzeugkombination ein manuell betätigbares Bedienelement, eine elektronische Steuereinheit, zumindest eine im Anhänger angeordnete steuerbare Anhängerbremse, erste Mittel zum Messen der Temperatur der mindestens einen Anhängerbremse, mindestens eine im Zugfahrzeug angeordnete Zugfahrzeugbremse und zweite Mittel zum Messen der Temperatur der mindestens einen Zugfahrzeugbremse, wobei Anhängerbremse, Bedienelement, erste Mittel und zweite Mittel zum Messen der Temperatur mit der Steuereinheit verbunden sind und die Steuereinheit derart eingerichtet ist, dass diese ein Bremssteuerwert bildet, der zumindest von der gemessenen Temperatur der mindestens einen Anhängerbremse, der gemessenen Temperatur der mindestens einen Zugfahrzeugbremse und von einem durch das Bedienelement vorgebbaren Anforderungssteuerwert abhängig ist, und in Abhängigkeit dieses Bremssteuerwertes die Steuereinheit die mindestens eine Anhängerbremse steuert.

Der Bremssteuerwert ist damit neben der Temperatur der mindestens einen Anhängerbremse auch von der Temperatur der mindestens einen Zugfahrzeugbremse abhängig. Dies ermöglicht es, bei der Bestimmung des Bremssteuerwertes die Temperatur der mindestens einen Zugfahrzeugbremse zu berücksichtigen. Eine Streckbremsung ist damit nicht nur allein über die Temperatur der mindestens einen Anhängerbremse, sondern auch über die Temperatur der mindestens einen Zugfahrzeugbremse beeinflussbar. Beispielsweise ist es möglich, eine Streckbremsung einerseits zuzulassen, obwohl die mindestens eine Anhängerbremse überhitzt ist, aber die Überhitzung der mindestens einen Zugfahrzeugbremse noch stärker ist als die der Anhängerbremse, andererseits aber eine Streckbremsung zu reduzieren oder zu unterdrücken, wenn die mindestens eine Anhängerbremse überhitzt ist, die mindestens eine Zugfahrzeugbremse hingegen nicht überhitzt ist. Erfindungsgemäß lässt sich damit die starke Streckbremsung, hier über Bildung des Bremssteuerwertes, wesentlich effektiver einer bestimmten Situation der Fahrzeugkombination anpassen.

Der Anforderungssteuerwert entspricht der Stärke der gewünschten Streckbremsung und ist damit abhängig von der Betätigung des Bedienelementes. Der Bremssteuerwert bestimmt die Stärke, mit der die zumindest eine Anhängerbremse betätigt wird. Vorzugsweise wird der Bremssteuerwert laufend aktualisiert. In diesem Zusammenhang werden auch die zeitabhängigen Größen, von denen der Bremssteuerwert abhängig ist, wie Anforderungssteuerwert oder auch Temperaturen der Bremsen, fortlaufend aktualisiert, wodurch eine dynamische Steuerung gegeben ist. Ebenfalls ist es aber möglich, dass, obwohl zeitabhängig, ein oder mehrere Größen nur einmalig ermittelt werden, und diese dann innerhalb eines bestimmten Zeitabschnitts für die Bestimmung des Bremssteuerwertes verwendet werden. Beispielsweise könnte die Temperatur der mindestens einen Anhängerbremse und die Temperatur der mindestens einen Zugfahrzeugbremse am Beginn der Streckbremsung einmalig ermittelt werden, und diese Werte für die fortlaufende Aktualisierung des Bremssteuerwertes verwendet werden, wohingegen eine Änderung des Anforderungssteuerwertes durch Betätigung des Bedienelementes bei der Bildung des Bremssteuerwertes fortlaufend berücksichtigt wird.

Die Streckbremsvorrichtung kann mit einer Betriebsbremse kombiniert sein. Die Steuereinheit kann ein autarkes System sein, oder auch als Teil eines anderen Steuerungssystems ausgebildet sein, beispielsweise eines EBS oder ABS, insbesondere in einem Steuermodul eines derartigen Systems integriert sein.

Vorzugsweise ist der Bremssteuerwert abhängig von der Differenz zwischen der Temperatur der mindestens einen Zugfahrzeugbremse und der Temperatur der mindestens einen Anhängerbremse. Der Differenzwert der Temperaturen der Zugfahrzeugbremse und der Anhängerbremse gibt eine Aussage darüber, welche der Bremsen stärker belastet ist. Ist der Differenzwert positiv, also die Zugfahrzeugbremse stärker erhitzt, so kann das Zulassen einer Streckbremsung trotz ebenfalls überhitzter Anhängerbremse sinnvoll sein. Ist der Differenzwert negativ, so spricht dies dafür, im Falle der Überhitzung der Anhängerbremse die gewünschte Streckbremsung, repräsentiert durch den Anforderungssteuerwert, zu reduzieren, oder vollständig zu unterdrücken.

Zugfahrzeug und der mindestens eine Anhänger können unterschiedliche Typen von Bremsen aufweisen. So kann beispielsweise das eine Teilfahrzeug Scheibenbremsen und das andere Teilfahrzeug Trommelbremsen verwenden. Des Weiteren ist es möglich, dass ein Teilfahrzeug eine Mischbestückung aus beispielsweise Scheibenbremsen und Trommelbremsen aufweist. Derartige Mischkonfigurationen innerhalb einer Fahrzeugkombination können bei der Bildung des Bremssteuerwertes berücksichtigt werden. Die Temperaturwerte sind entsprechend anzupassen. Die Erfindung ist nicht auf bestimmte Bremstypen beschränkt. Beispielsweise kann die Erfindung auch für Fahrzeugkombinationen benutzt werden, die elektromotorische Bremsen aufweisen.

Vorzugsweise ist die Steuereinheit derart eingerichtet, dass dieser einen Korrekturwert bildet, der zumindest von der gemessenen Temperatur der mindestens einen Anhängerbremse und der gemessenen Temperatur der mindestens einen Zugfahrzeugbremse abhängig ist, und der Bremssteuerwert abhängig vom Korrekturwert ist. Vorzugsweise ist der Korrekturwert von der Differenz zwischen der Temperatur der mindestens einen Zugfahrzeugbremse und der Temperatur der mindestens einen Anhängerbremse, sowie von der Temperatur der mindestens einen Anhängerbremse abhängig. Ein derartiger Korrekturfaktor berücksichtigt damit die relative Belastung zwischen der mindestens einen Zugfahrzeugbremse und der mindestens einen Anhängerbremse, sowie den Zustand der Anhängerbremse. Der Bremssteuerwert wird in diesem Falle auf Grundlage des Korrekturfaktors und des Anforderungssteuerwertes gebildet. In einer ersten Variante ist der Bremssteuerwert proportional zum Korrekturwert und zum Anforderungssteuerwert, enthält also das Produkt dieser beiden Größen. Der Korrekturwert wirkt somit als Korrekturfaktor für den Anforderungssteuerwert. Vorzugsweise ist in diesem Falle der Korrekturwert auf einen Bereich von 0 bis 1 normiert.

Als Alternative kann ein Maximal-Bremssteuerwert gebildet werden, der abhängig von dem Korrekturwert ist, und der eine obere Grenze für den Bremssteuerwert festlegt. Der Maximal-Bremssteuerwert wird mit dem Anforderungssteuerwert verglichen. Der Bremssteuerwert wird gleich dem Anforderungssteuerwert gesetzt, wenn der Anforderungssteuerwert kleiner ist als der Maximal-Bremssteuerwert. Ansonsten wird der Bremssteuerwert gleich dem Maximalbremssteuerwert gesetzt. Auf diese Weise wird eine gewünschte Streckbremsung bis zu einer bestimmten Stärke, die durch den Korrekturwert bestimmt wird, zugelassen, über diesen Wert hinaus kann allerdings die Streckbremsung nicht verstärkt werden.

Vorzugsweise umfasst der Anhänger zumindest zwei Anhängerbremsen mit ersten Mitteln zum Messen der Temperaturen der mindestens zwei Anhängerbremsen und/oder das Zugfahrzeug umfasst zumindest zwei Zugfahrzeugbremsen mit zweiten Mitteln zum Messen der Temperaturen der mindestens zwei Zugfahrzeugbremsen, wobei der Bremssteuerwert von der Durchschnittstemperatur oder der maximalen Temperatur der mindestens zwei Anhängerbremsen und/oder der Durchschnittstemperatur oder der maximalen Temperatur der mindestens zwei Zugfahrzeugbremsen abhängig ist. Dies ermöglicht die Einbeziehung mehrerer Anhängerbremsen und/oder Zugfahrzeugbremsen in die erfindungsgemäße Streckbremsvorrichtung. Die maximale Temperatur ist dabei die Temperatur der Bremse, die gegenüber den anderen Bremsen die höchste Temperatur aufweist. Bei Bildung der Durchschnittstemperatur ist es besonders vorteilhaft, die Temperaturen der einzelnen Bremsen zu wichten, wobei höhere Temperaturen stärker gewichtet werden.

Erste und zweite Mittel zum Messen der Temperatur können beispielsweise Temperatursensoren sein. Alternativ ist es ebenfalls möglich die Temperatur der jeweiligen Bremse über ein Temperaturmodell zu ermitteln. Temperaturmodelle ermöglichen die indirekte Erfassung der Temperatur. Beispielsweise kann die Temperatur mit Hilfe von Temperatursensoren, die in unmittelbarer Nähe eines der Bremselemente, beispielsweise einer Bremsscheibe, angeordnet sind, erfolgen. Eine Alternative ist die Ermittlung der Temperatur über ein im Belastungszustand der Bremse repräsentierendes Lastsignal, dass die Fahrzeuggeschwindigkeit mit der Anpresskraft der Bremsscheibe verknüpft, woraus die resultierende Temperaturerhöhung der Bremsscheibe ermittelt und ein voreingestellter Temperatureingangswert entsprechend erhöht wird. Eine weitere Alternative ist die Ermittlung der Temperatur durch Berechnung der Wärmeenergie-Zufuhr zu der Bremse aus der Abnahme der kinetischen Energie des Fahrzeugs beim Bremsvorgang. Eine weitere Alternative ist die Ermittlung der Temperatur aus der Verformung von Bauteilen der Bremse. Eine weitere Alternative ist die Auswahl eines Bauteils, dessen Temperatur ermittelt wird, derart, dass diese Temperatur den thermischen Belastungszustand der Bremse widerspiegelt, woraus auch die Temperatur der Bremse geschlossen werden kann.

Die Erfindung wird nun anhand eines Ausführungsbeispieles, welches durch zwei Figuren dargestellt ist, näher erläutert. Dabei zeigt:
- Fig. 1: ein Schema einer Fahrzeugkombination aus einem Zugfahrzeug und einem Anhängefahrzeug mit einer erfindungsgemäßen Streckbremsvorrichtung, und
- Fig. 2: ein Diagramm, das den Korrekturwert Y in Abhängigkeit der Temperaturdifferenz zwischen der Temperatur der Zugfahrzeugbremsen und der Anhängerbremsen, sowie in Abhängigkeit der Temperatur der Anhängerbremsen darstellt.

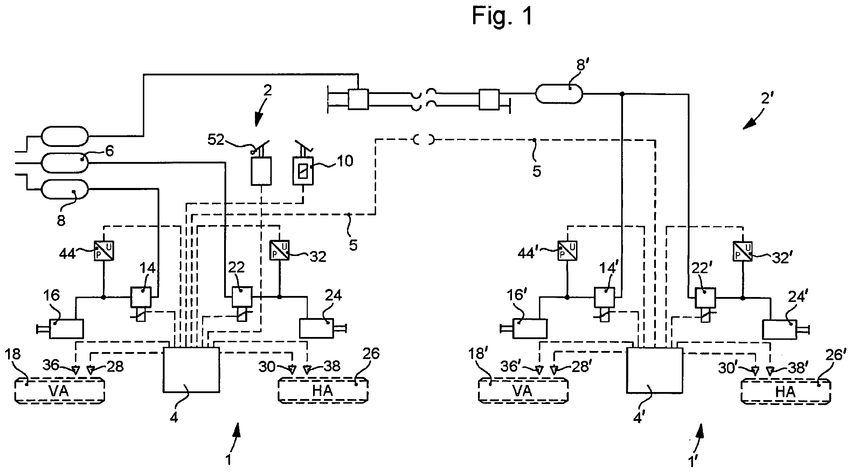

Figur 1 zeigt schematisch eine Fahrzeugkombination aus einem Zugfahrzeug 1 und einem Anhängefahrzeug 1' mit jeweils einer hier pneumatisch betriebenen EBS-Bremsanlage 2, 2' mit einer elektronischen Steuereinheit, hier ein Zentralsteuergerät 4, 4', für Räder mit Radbremsen 18, 18' der Vorderachsen und Radbremsen 26, 26' der Hinterachsen von Zugfahrzeug 1 und Anhänger 1', wobei die Zentralsteuergeräte 4, 4' über eine Signalleitung 5 miteinander verbunden sind. Druckleitungen sind mit durchgezogenen Linien und elektrische Leitungen bzw. Signalleitungen sind mit gestrichelten Linien gezeichnet. Es sind nur die Räder und die zugehörigen pneumatischen Bauteile einer Seite der Vorderachse VA, VA' und der Hinterachse HA, HA' der Teilfahrzeuge 1, 1', der Fahrzeugkombination dargestellt.

Die zur Betätigung der Bremsen benötigte Druckluft wird in Druckluftbehältern 6, 8, 8' bereitgestellt. Über einen Fahrerbremswertgeber 10 im Zugfahrzeug 1 gibt der Fahrer dem EBS-System einen Soll-Wert vor. Die Bremskreise sind jeweils zweikreisig ausgebildet und führen über Druckmodulatoren 14, 14' zu Bremszylindern 16, 16' für die Räder mit Radbremsen 18, 18' der Vorderachsen. Die anderen Bremskreise führen über weitere Druckmodulatoren 22, 22' zu Bremszylindern 24, 24' für die Räder mit Radbremsen 26, 26' der Hinterachsen. Des Weiteren ist in den Zentralsteuergeräten 4, 4' ein Antiblockiersystem enthalten, das über Radsensoren 28, 28', 30, 30' Informationen über das Drehverhalten der Räder erhält, und durch Steuerung der Druckmodulatoren 14, 14', 22, 22' einer möglichen Blockierneigung entgegenwirken kann. Zudem besitzen die Zentralsteuereinheiten 4, 4' Eingänge für Drucksensoren 32, 32', 44, 44' zur Ermittlung der Bremsdrücke in den Bremszylindern 16, 16', 24, 24' der Vorder- und Hinterachsen.

Ferner weist die Fahrzeugkombination eine Streckbremsvorrichtung auf. Diese umfasst ein manuell betätigbares Bedienelement 52, hier ein stufenlos verstellbarer Hebel, eine elektronische Steuereinheit, die in diesem Fall in die elektronische Steuereinheit 4, 4' integriert ist, die im Anhänger 1' angeordneten steuerbaren Anhängerbremsen 18', 26', erste Mittel zum Messen der Temperatur T_Anh der Anhängerbremsen 18', 26', hier Temperatursensoren 36', 28', die im Zugfahrzeug 1 angeordneten Zugfahrzeugbremsen 18, 26 und zweite Mittel zum Messen der Temperatur T_Zug der mindestens einen Zugfahrzeugbremse 18, 26, hier Temperatursensoren 36, 38. Bedienelement 52 und Temperatursensoren 36, 36', 38, 38' sind neben den Zugfahrzeugbremsen 18, 26 und den Anhängerbremsen 18', 26' mit den Steuereinheiten 4, 4' zur Signalübertragung verbunden. Die Steuereinheiten 4, 4' sind derart eingerichtet, dass diese einen Bremssteuerwert B bilden, der zumindest von der gemessenen Temperatur T_Anh der Anhängerbremsen 18', 26', der gemessenen Temperatur T_Zug der Zugfahrzeugbremsen 18, 26 und von einem durch das Bedienelement 52 vorgebbaren Anforderungssteuerwert A abhängig ist, und in Abhängigkeit dieses Bremssteuerwertes B die Steuereinheiten 4, 4' die Anhängerbremsen 18', 26' steuern.

In diesem Ausführungsbeispiel wird die Temperatur T_Anh aus der Durchschnittstemperatur der Anhängerbremsen 18', 26' gebildet, wobei die einzelnen Temperaturwerte gewichtet werden. Höhere Temperaturen werden dabei stärker gewichtet als niedrigere Temperaturen. In entsprechender Weise wird die Temperatur T_Zug der Zugfahrzeugbremsen 18, 26 aus der Durchschnittstemperatur der Zugfahrzeugbremsen gebildet, ebenfalls mit einer Wichtung. Alternativ hierzu könnte insbesondere auch als Temperatur T_Anh der Temperaturwert der Anhängerbremse mit der höchsten Temperatur genommen werden. Entsprechendes gilt für T_Zug.

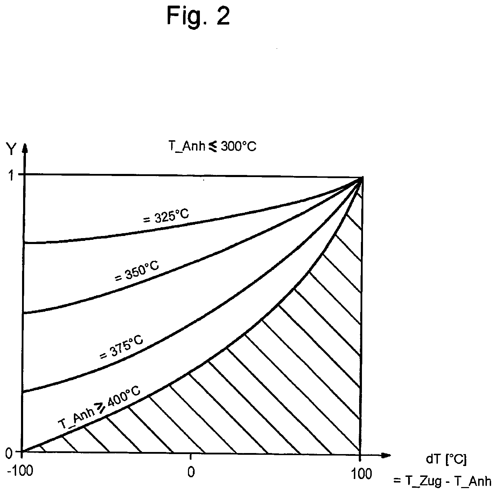

Aus der Temperatur T_Anh der Anhängerbremsen 18', 26' und der Temperatur T_Zug der Zugfahrzeugbremsen 18, 26 wird ein Korrekturwert Y gebildet, wobei Y eine Funktion ist, die abhängig von der Differenz zwischen der Temperatur T_Zug der Zugfahrzeugbremsen 18, 26 und der Temperatur T_Anh der Anhängerbremsen 18', 26', sowie von der Temperatur T_Anh der Anhängerbremsen 18', 26' ist. Figur 2 zeigt den Korrekturwert Y in Abhängigkeit der genannten Größen in einem Diagramm. Die angegebenen Werte sind in diesem Ausführungsbeispiel auf die Verwendung von typischen Scheibenbremsen als Anhängerbremsen 18', 26' und Zugfahrzeugbremsen 18, 26 angepasst. Bei der Verwendung von Trommelbremsen müsste die Funktion des Korrekturwertes Y entsprechend angepasst werden. Die Werte wären für Trommelbremsen niedriger. Diese könnten vorzugsweise aus den vorhandenen Werten mittels eines Proportionalitätsfaktors ermittelt werden. Alternativ wäre auch eine Anpassung durch einen Offset denkbar. Ähnliches würde für die Verwendung anderer Bremstypen gelten. Auch Mischbestückungen mit verschiedenen Bremstypen können auf diese Weise berücksichtigt werden.

In einer ersten Variante ist die Steuereinheit 4, 4' derart eingerichtet, dass ein Maximal-Bremssteuerwert gebildet wird, der abhängig von dem Korrekturwert Y ist. Der Maximal-Bremssteuerwert wird mit dem Anforderungssteuerwert A verglichen, wobei der Bremssteuerwert B gleich dem Anforderungssteuerwert A gesetzt wird, wenn der Anforderungssteuerwert kleiner ist als der Maximal-Bremssteuerwert, und ansonsten der Bremssteuerwert B gleich dem Maximal-Bremssteuerwert gesetzt wird. In diesem Ausführungsbeispiel entspricht der Korrekturwert Y dem Maximal-Bremssteuerwert. Der Bremssteuerwert B lässt sich also durch die Funktion B = Min (A, Y) beschreiben.

In einer zweiten Variante ist die Steuereinheit 4, 4' derart eingerichtet, dass der Bremssteuerwert B proportional zum Korrekturwert Y und zum Anforderungssteuerwert A gebildet wird. In dieser Variante lässt sich der Bremssteuerwert B durch die Funktion B = A · Y beschreiben.

Das in Figur 2 gezeigte Diagramm lässt sich zur Beschreibung beider Varianten hinzuziehen.

Das Diagramm stellt die Funktion Y (dT, T_Anh) dar, wobei dT = T_Zug - T_Anh, also die Differenz der Durchschnittstemperaturen, ist. Für Temperaturwerte T_Anh ≤ 300 °C beträgt der Wert von Y unabhängig von dT gleich 1. Der Wert der Temperatur T_Anh spiegelt dabei eine Grenztemperatur wieder, unterhalb derer die Anhängerbremsen nicht überhitzt sind.

Sowohl der Anforderungssteuerwert A als auch der Korrekturwert Y sind auf dem Wertbereich 0 bis 1 normiert. Ein Anforderungswert A = 0 bedeutet, dass keine Streckbremsung vorliegt, ein Wert von A = 1 bedeutet maximale Streckbremsung. Übertragen auf die beiden Varianten der Bremswertsteuerbildung bedeutet ein Wert Y = 1, dass der Anforderungssteuerwert A durch den Korrekturwert Y nicht beeinflusst wird.

Überschreitet jedoch die Temperatur T_Anh die Grenztemperatur, so kann Y, in Abhängigkeit der Differenz dT, Werte unterhalb von 1 einnehmen. Für die erste Variante der Bremssteuerwertbestimmung heißt dies, dass die Streckbremsung, repräsentiert durch den Anforderungssteuerwert A, je nach Wert von Y begrenzt ist, für die zweite Variante, dass die Stärke der Streckbremsung durch den Wert Y, der wie ein Korrekturfaktor auf den Anforderungssteuerwert A wirkt, abgeschwächt ist.

Ab einer zweiten Grenztemperatur der Anhängerbremsen, hier T_Anh ≥ 400 °C, ist Y unabhängig von der Temperatur der Anhängerbremsen T_Anh. In diesem Fall ist Y lediglich von der Temperaturdifferenz dT abhängig.

Im Zwischenbereich der Anhängertemperaturen, also zwischen 300 °C bis T_Anh = 400 °C ist Y eine von T_Anh abhängige, stetige Funktion. Für die Temperaturwerte T_Anh = 325 °C, 350 °C und 375 °C sind exemplarisch die zugehörigen Kurven dargestellt.

Wie aus dem Diagramm ersichtlich, ist der Korrekturwert Y stark abhängig von der Temperaturdifferenz dT. Beispielsweise würde bei einer Temperaturdifferenz von 0 °C und eine Anhängertemperatur T_Anh = 400 °C eine Streckbremsung zumindest teilweise noch möglich sein, während bei einer Temperaturdifferenz von -100 °C, d. h., T_Zug = 300 °C, eine Streckbremsung nicht mehr zugelassen sein.

In diesem Ausführungsbeispiel wird der Bremssteuerwert durch die Steuereinheiten 4, 4' laufend aktualisiert, was die laufende Abfrage des Anforderungssteuerwertes des Bedienelementes 52 und der Temperatursensoren 36, 36', 38, 38' des Zugfahrzeugs bzw. des Anhängers beinhaltet. Alternativ ist es insbesondere aber auch möglich, Temperaturwerte T_Zug und T_Anh lediglich zu Beginn einer Streckbremsung zu ermitteln.

Die Steuereinrichtung 4, 4' weisen geeignete elektronische Bauteile und Programm-Codes auf, um die beschriebene Berechnung des Steuerwertes einschließlich der Ermittlung der Temperaturen zu ermöglichen. In diesem Ausführungsbeispiel ist die elektronische Steuereinheit der Streckbremsvorrichtung in der Steuereinheit 4, 4' des EBS-Bremssystems integriert. Alternativ ist es aber ebenso möglich, eine autarke Steuereinheit vorzusehen.

## Patentansprüche

1. Fahrzeugkombination mit einem Zugfahrzeug (1) und mindestens einem Anhänger (1') umfassend eine elektronische Steuereinheit (4, 4'), zumindest eine im Anhänger (1') angeordnete steuerbare Anhängerbremse (18', 26'), erste Mittel (36', 38') zum Messen der Temperatur (T_Anh) der mindestens einen Anhängerbremse (18', 26'), mindestens eine im Zugfahrzeug (1) angeordnete Zugfahrzeugbremse (18, 26) und zweite Mittel (36, 38) zum Messen der Temperatur (T_Zug) der mindestens einen Zugfahrzeugbremse (18, 26), wobei Anhängerbremse (18', 26'), erste Mittel (36', 38') und zweite Mittel (36, 38) zum Messen der Temperatur mit der Steuereinheit (4, 4') verbunden sind, **dadurch gekennzeichnet, dass** die Fahrzeugkombination weiterhin eine Streckbremsvorrichtung mit einem manuell betätigbaren Bedienelement (52) umfasst und das Bedienelement (52) mit der Steuereinheit (4, 4') verbunden ist, wobei die Steuereinheit (4, 4') derart eingerichtet ist, dass diese einen Bremssteuerwert bildet, der zumindest von der gemessenen Temperatur (T_Anh) der mindestens einen Anhängerbremse (18', 26'), der gemessenen Temperatur (T_Zug) der mindestens einen Zugfahrzeugbremse (18, 26) und von einem durch das Bedienelement (52) vorgebbaren Anforderungssteuerwert abhängig ist, und in Abhängigkeit dieses Bremssteuerwertes die Steuereinheit (4, 4') die mindestens eine Anhängerbremse (18', 26') steuert.

2. Fahrzeugkombination nach Anspruch 1, wobei der Bremssteuerwert abhängig ist von der Differenz (dT) zwischen der Temperatur (T_Zug) der mindestens einen Zugfahrzeugbremse (18, 26) und der Temperatur (T_Anh) der mindestens einen Anhängerbremse (18', 26').

3. Fahrzeugkombination nach Anspruch 2, wobei die Steuereinheit derart eingerichtet ist, dass diese einen Korrekturwert (Y) bildet, der zumindest von der gemessenen Temperatur (T_Anh) der mindestens einen Anhängerbremse (18', 26') und der gemessenen Temperatur (T_Zug) der mindestens einen Zugfahrzeugbremse (18, 26) abhängig ist, und der Bremssteuerwert abhängig vom Korrekturwert ist.

4. Fahrzeugkombination nach Anspruch 3, wobei der Korrekturwert bei Betätigung des Bedienelementes (52) genau einmal oder zeitlich versetzt mehrere Male gebildet wird.

5. Fahrzeugkombination nach einem der vorhergehenden Ansprüche, wobei der Anhänger zumindest zwei Anhängerbremsen (18', 26') mit ersten Mitteln (36', 38') zum Messen der Temperaturen der mindestens zwei Anhängerbremsen (18', 26') aufweist und/oder das Zugfahrzeug zumindest zwei Zugfahrzeugbremsen (18, 26) mit zweiten Mitteln (36, 38) zum Messen der Temperaturen der mindestens zwei Zugfahrzeugbremsen (18, 26) aufweist, und der Bremssteuerwert von der Durchschnittstemperatur (T_Anh) oder der maximalen Temperatur der mindestens zwei Anhängerbremsen (18', 26') und/oder der Durchschnittstemperatur (T_Zug) oder der maximalen Temperatur der mindestens zwei Zugfahrzeugbremsen (18, 26) abhängig ist.

6. Fahrzeugkombination nach einem der Ansprüche 3 bis 5 in Verbindung mit Anspruch 3, wobei die Steuereinheit (4, 4') derart eingerichtet ist, dass ein Maximalbremssteuerwert gebildet wird, der abhängig von dem Korrekturwert (Y) ist, und der Maximalbremssteuerwert mit dem Anforderungssteuerwert verglichen wird, und der Bremssteuerwert gleich dem Anforderungssteuerwert gesetzt wird, wenn der Anforderungssteuerwert kleiner ist als der Maximalbremssteuerwert, und ansonsten der Bremssteuerwert gleich dem Maximalbremssteuerwert gesetzt wird.

7. Fahrzeugkombination nach einem der Ansprüche 3 bis 5 in Verbindung mit Anspruch 3, wobei der Bremssteuerwert proportional zum Korrekturwert (Y) und zum Anforderungssteuerwert ist.

8. Fahrzeugkombination nach einem der vorhergehenden Ansprüche, wobei erste und zweite Mittel (36', 38'; 36, 38) zum Messen der Temperatur (T_Anh, T_Zug) zumindest einen Temperatursensor und/oder ein Temperaturmodell aufweisen.

9. Verfahren zur Steuerung einer Streckbremsvorrichtung einer Fahrzeugkombination mit einem Zugfahrzeug (1), mindestens einem Anhänger (1') und einer Streckbremsvorrichtung, umfassend ein manuell betätigbares Bedienelement (52), eine elektronische Steuereinheit (4, 4'), zumindest eine im Anhänger (1') angeordnete steuerbare Anhängerbremse (18', 26'), erste Mittel (36', 38') zum Messen der Temperatur (T_Anh) der mindestens einen Anhängerbremse (18', 26'), mindestens eine im Zugfahrzeug (1) angeordnete Zugfahrzeugbremse (18, 26) und zweite Mittel (36, 38) zum Messen der Temperatur (T_Zug) der mindestens einen Zugfahrzeugbremse (18, 26), enthaltend die Schritte, dass ein Bremssteuerwert gebildet wird, der zumindest von der gemessenen Temperatur (T_Anh) der mindestens einen Anhängerbremse (18', 26'), der gemessenen Temperatur (T_Zug) der mindestens einen Zugfahrzeugbremse (18, 26) und von einem durch das Bedienelement (52) vorgegebenen Anforderungssteuerwert abhängig ist, und in Abhängigkeit des Bremssteuerwertes die mindestens eine Anhängerbremse (18', 26') gesteuert wird.

## Claims

1. Vehicle combination having a tractor vehicle (1) and at least one trailer (1') comprising an electronic control unit (4, 4'), at least one controllable trailer brake (18', 26') which is arranged in the trailer (1'), first means (36', 38') for measuring the temperature (T_Anh) of the at least one trailer brake (18', 26'), at least one tractor vehicle brake (18, 26) which arranged in the tractor vehicle (1), and second means (36, 38) for measuring the temperature (T_Zug) of the at least one tractor vehicle brake (18, 26), wherein the trailer brake (18', 26'), first means (36', 38') and second means (36, 38) for measuring the temperature are connected to the control unit (4, 4'), **characterized in that** the vehicle combination also comprises an anti-jack-knife brake device with a manually activatable operator control element (52), and the operator control element (52) is connected to the control unit (4, 4'), wherein the control unit (4, 4') is configured in such a way that it forms a brake control value which is dependent at least on the measured temperature (T_Anh) of the at least one trailer brake (18', 26'), on the measured temperature (T_Zug) of the at least one tractor vehicle brake (18, 26) and on a request control value which can be predefined by the operator control element (52), and the control unit (4, 4') controls the at least one trailer brake (18', 26') as a function of this brake control value.

2. Vehicle combination according to Claim 1, wherein the brake control value is dependent on the difference (dT) between the temperature (T_Zug) of the at least one tractor vehicle brake (18, 26) and the temperature (T_Anh) of the at least one trailer brake (18', 26').

3. Vehicle combination according to Claim 2, wherein the control unit is configured in such a way that it forms a correction value (Y) which is dependent at least on the measured temperature (T_Anh) of the at least one trailer brake (18', 26') and the measured temperature (T_Zug) of the at least one tractor vehicle brake (18', 26), and the brake control value is dependent on the correction value.

4. Vehicle combination according to Claim 3, wherein , when the operator control element (52) is activated, the correction value is formed precisely once or several times in a chronologically staggered fashion.

5. Vehicle combination according to one of the preceding claims, wherein the trailer has at least two trailer brakes (18', 26') with first means (36', 38') for measuring the temperatures of the at least two trailer brakes (18', 26'), and/or the tractor vehicle has at least two tractor vehicle brakes (18, 26) with second means (36, 38) for measuring the temperatures of the at least two tractor vehicle brakes (18, 26), and the brake control value is dependent on the average temperature (T_Anh) or the maximum temperature of the at least two trailer brakes (18', 26') and/or the average temperature (T_Zug) of the maximum temperature of the at least two tractor vehicle brakes (18, 26).

6. Vehicle combination according to one of Claims 3 to 5 in conjunction with Claim 3, wherein the control unit (4, 4') is configured in such a way that a maximum brake control value is formed which is dependent on the correction value (Y), and the maximum brake control value is compared with the request control value, and the brake control value is set to be equal to the request control value if the request control value is lower than the maximum brake control value, and otherwise the brake control value is set to be equal to the maximum brake control value.

7. Vehicle combination according to one of Claims 3 to 5 in conjunction with Claim 3, wherein the brake control value is proportional to the correction value (Y) and the request control value.

8. Vehicle combination according to one of the preceding claims, wherein the first and second means (36', 38'; 36, 38) for measuring the temperature (T_Anh, T_Zug) have at least one temperature sensor and/or one temperature model.

9. Method for controlling an anti-jack-knife brake device of a vehicle combination having a tractor vehicle (1), at least one trailer (1') and one anti-jack-knife brake device, comprising a manually activatable operator control element (52), an electronic control unit (4, 4'), at least one controllable trailer brake (18', 26') which is arranged in the trailer (1'), first means (36', 38') for measuring the temperature (T_Anh) of the at least one trailer brake (18', 26'), at least one tractor vehicle brake (18, 26) which is arranged in the tractor vehicle (1), and second means (36, 38) for measuring the temperature (T_Zug) of the at least one tractor vehicle brake (18, 26), containing the steps that a brake control value is formed which is dependent at least on the measured temperature (T_Anh) of the at least one trailer brake (18', 26') on the measured temperature (T_Zug) of the at least one tractor vehicle brake (18, 26), and on a request control value which is predefined by the operator control element (52), and the at least one trailer brake (18', 26') is controlled as a function of the brake control value.

## Revendications

1. Combinaison de véhicule comprenant un véhicule tracteur (1) et au moins une remorque (1'), comprenant
une unité de commande électronique (4, 4'), au moins un frein de remorque commandable (18', 26') disposé dans la remorque (1'), des premiers moyens (36', 38') pour mesurer la température (T_Anh) d'au moins un frein de remorque (18', 26'), au moins un frein de véhicule tracteur (18, 26) disposé dans le véhicule tracteur (1) et des seconds moyens (36, 38) pour mesurer la température (T_Zug) d'au moins un frein de véhicule tracteur (18, 26), dans laquelle des freins de remorque (18', 26'), des premiers moyens (36', 38') et des seconds moyens (36, 38) pour mesurer la température sont reliés à l'unité de commande (4, 4'), **caractérisée en ce que** la combinaison de véhicule comprend en outre un dispositif de frein de maintien en ligne doté d'un élément de commande (52) manuel et l'élément de commande (52) est relié à l'unité de commande (4, 4'), dans laquelle l'unité de commande (4, 4') est conçue de telle sorte qu'elle établisse une valeur de commande de frein qui dépend au moins de la température mesurée (T_Anh) de l'au moins un frein de remorque (18', 26'), de la température mesurée (T_Zug) de l'au moins un frein de tracteur (18, 26) et d'une valeur de commande sur demande prédéfinissable par l'élément de commande (52), et l'unité de commande (4, 4') commande l'au moins un frein de remorque (18', 26') en fonction de ladite valeur de commande de frein.

2. Combinaison de véhicule selon la revendication 1, dans laquelle la valeur de commande de frein dépend de la différence (dT) entre la température (T_Zug) d'au moins un frein de tracteur (18, 26) du véhicule tracteur et la température (T_Anh) de l'au moins un frein de remorque (18', 26').

3. Combinaison de véhicule selon la revendication 2, dans laquelle l'unité de commande est conçue de telle sorte qu'elle établisse une valeur de correction (Y) qui dépend au moins de la température mesurée (T_Anh) de l'au moins un frein de remorque (18', 26') et de la température mesurée (T_Zug) de l'au moins un frein de tracteur (18, 26), et dans laquelle la valeur de commande de frein dépend de la valeur de correction.

4. Combinaison de véhicule selon la revendication 3, dans laquelle la valeur de correction est établie exactement une ou plusieurs fois avec un décalage dans le temps lorsque l'élément de commande (52) est actionné.

5. Combinaison de véhicule selon l'une des revendications précédentes, dans laquelle la remorque comporte au moins deux freins de remorque (18', 26') dotés de premiers moyens (36', 38') pour mesurer les températures des au moins deux freins de remorque (18', 26') et/ou le véhicule tracteur comporte au moins deux freins de tracteur (18, 26) dotés de seconds moyens (36, 38) pour mesurer les températures des au moins deux freins de tracteur (18, 26), et la valeur de commande de frein dépend de la température moyenne (T_Anh) ou de la température maximale des au moins deux freins de remorque (18', 26') et/ou de la température moyenne (T_Zug) ou de la température maximale des au moins deux freins de tracteur (18, 26).

6. Combinaison de véhicule selon l'une des revendications 3 à 5 en association avec la revendication 3, dans laquelle l'unité de commande (4, 4') est conçue de telle sorte qu'elle établisse une valeur de commande de frein maximale dépendant de la valeur de correction (Y), et la valeur de commande de frein maximale est comparée à la valeur de commande de demande, et la valeur de commande de frein est réglée à une valeur égale à la valeur de commande de demande si la valeur de commande de demande est inférieure à la valeur de commande de frein maximale, et dans le cas contraire, la valeur de commande de frein est réglée à une valeur égale à la valeur de commande de frein maximale.

7. Combinaison de véhicule selon l'une quelconque des revendications 3 à 5 en association avec la revendication 3, dans laquelle la valeur de commande de frein est proportionnelle à la valeur de correction (Y) et à la valeur de commande de demande.

8. Combinaison de véhicule selon l'une des revendications précédentes, dans laquelle des premier et second moyens (36', 38' ; 36, 38) destinés à mesurer la température (T_Anh, T_Zug) comportent au moins une sonde de température et/ou un modèle de température.

9. Procédé de commande d'un dispositif de frein de maintien en ligne d'une combinaison de véhicule doté d'un véhicule tracteur (1), d'au moins une remorque (1') et d'un dispositif de frein de maintien en ligne comprenant un élément de commande actionnable manuellement (52), une unité de commande électronique (4, 4'), au moins un frein de remorque commandable (18', 26') disposé dans la remorque (1'), des premiers moyens (36', 38') pour mesurer la température (T_Anh) d'au moins un frein de remorque (18', 26'), au moins un frein de tracteur (18, 26) disposé dans le véhicule tracteur (1) et des seconds moyens (36, 38) pour mesurer la température (T_Zug) de l'au moins un frein de tracteur (18, 26), comprenant les étapes consistant à établir une valeur de commande de frein qui dépend au moins de la température mesurée (T_Anh) de l'au moins un frein (18', 26'), de la température mesurée (T_Zug) de l'au moins un frein de tracteur (18, 26) et d'une valeur de commande de demande prédéterminée par l'élément de commande (52),
et dans lequel l'au moins un frein de remorque (18', 26') est commandé en fonction de la valeur de commande de frein.
